# EUROPEAN PATENT SPECIFICATION

(11) **EP 2 770 844 B1**
(45) Date of publication and mention of the grant of the patent: **05.12.2018**
(21) Application number: 12768795.2
(22) Date of filing: 01.10.2012
(51) Int. Cl.: A23L 19/00, A23L 27/00, A23L 23/00, A23L 23/10, A23L 2/02

(54) **TOMATO DERIVED COMPOSITION CONTAINING ENHANCED LEVELS OF 5'INOSINE MONOPHOSPHATE**
ZUSAMMENSETZUNG AUS TOMATEN MIT ERHÖHTEM GEHALT AN 5'INOSIN-MONOPHOSPHAT
COMPOSITION ISSUE DE TOMATE CONTENANT DES NIVEAUX ACCRUS D'INOSINE 5'-MONOPHOSPHATE

(30) Priority: 20.10.2011 EP 11185896
(43) Date of publication of application: 03.09.2014
(73) Proprietor: Unilever N.V., 3013 AL Rotterdam (NL); Unilever PLC, London, Greater London EC4Y 0DY (GB)
(72) Inventor: BATENBURG, Amir, Maximiliaan, NL-3133 AT Vlaardingen (NL); KLOOSTER, Jan, ROELF, NL-3133 AT Vlaardingen (NL)
(74) Representative: van den Brom, Coenraad Richard
(86) International application number: PCT/EP2012/069343
(87) International publication number: WO 2013/056969

(56) References cited:
- EP-A1- 0 299 078
- WO-A1-99/60868
- WO-A1-03/063614
- WO-A1-2010/069743
- US-A- 4 303 680
- ORUNA-CONCHA M-J ET AL: "Differences in Glutamic Acid and 5'-Ribonucleotide Contents between Flesh and Pulp of Tomatoes and the Relationship with Umami Taste", JOURNAL OF AGRICULTURAL AND FOOD CHEMISTRY, AMERICAN CHEMICAL SOCIETY, US, vol. 55, no. 14, 14 June 2007 (2007-06-14) , pages 5776-5780, XP002537902, ISSN: 0021-8561, DOI: 10.1021/JF070791P
- KAZUAKI YOSHIMUNE, KEIGO KUGIMIYA, MITSUAKI MORIGUCHI: "Purification and characterization of a flavour-enhancing enzyme, thermostable adenosine-phosphate deaminase, from thermophilic Aspergillus fumigatus n°4", ANNALS OF MICROBIOLOGY, vol. 55, no. 4, 2005, pages 267-272, XP002688163,
- DATABASE WPI Week 200652 Thomson Scientific, London, GB; AN 2006-506761 XP002688162, & JP 2006 187233 A (HASEGAWA CO LTD) 20 July 2006 (2006-07-20)
- DATABASE GNPD [Online] MINTEL; May 2010 (2010-05), "Taste No. 5 Umami Paste", XP002688164, retrieved from www.gnpd.com Database accession no. 1320857

## Description

### TECHNICAL FIELD OF THE INVENTION

The present invention relates to a process of preparing a tomato derived composition by treating a tomato based starting material with deaminase and a tomato derived composition obtainable by said process.

### BACKGROUND OF THE INVENTION

Umami is one of the five basic tastes together with sweet, sour, bitter, and salty. Umami is a loanword from the Japanese meaning "pleasant savory taste".

For a long time, scientists debated whether umami was indeed a basic taste; but in 1985 at the first Umami International Symposium in Hawaii, the term Umami was officially recognized as the scientific term to describe the taste of glutamates and nucleotides. Now it is widely accepted as the fifth basic taste. Umami represents the taste of the amino acid L-glutamate and 5'-ribonucleotides such as 5'guanosine monophosphate (5'GMP) and 5'inosine monophosphate (5'IMP). It is described as a pleasant "brothy" or "meaty" taste with a long lasting, mouthwatering and coating sensation over the tongue. Its fundamental effect is the ability to balance taste and round off the total flavor of a dish. This ability is often referred to as "flavour enhancement".

Umami was not properly identified until 1908 by the scientist Kikunae Ikeda. He found that glutamate was responsible for the palatability of the broth from kombu seaweed. He noticed that the taste of kombu dashi was distinct from sweet, sour, bitter and salty and named it umami. Ikeda subsequently patented a process for the industrial production of the monosodium glutamate salt (MSG), which led to the foundation of the Ajinomoto company, who commercialized and popularized MSG.

Later, a disciple of professor Ikeda, Shintaro Kodama, discovered in 1913 that dried bonito flakes contained another umami substance. This was the ribonucleotide 5'IMP. In 1957, Akira Kuninaka realized that the ribonucleotide 5'GMP present in shiitake mushrooms also conferred the umami taste. One of Kuninaka's most important discoveries was the synergistic effect between ribonucleotides and glutamate. When foods rich in glutamate are combined with ingredients that have ribonucleotides, the resulting taste intensity is higher than the sum of both ingredients.

Many foodstuffs that may be consumed daily are rich in umami. Naturally occurring glutamate can be found in meats and vegetables. 5'IMP comes primarily from meats and fish and 5'GMP from fruit and vegetables. Thus, umami taste is common to foods that contain high levels of L-glutamate, 5'IMP and 5'GMP, most notably in fish, shellfish, cured meats, vegetables (e.g. mushrooms, ripe tomatoes, Chinese cabbage, spinach, etc.) or green tea, and fermented and aged products (e.g. cheeses, shrimp pastes, soy sauce, etc.).

In order to impart umami taste to foodstuffs it is well-known to add monosodium glutamate (MSG), 5'IMP and 5'GMP. Yeast extracts are also widely used to create savoury flavors and umami taste sensations. Yeast extract, like MSG, contains free glutamic acid. In addition, yeast extracts may contain 5'-ribonucleotides such as 5'GMP and 5'IMP.

It is known from US 5,626,984 that the flavour enhancing impact of yeast extracts can be improved by converting 5'AMP contained therein into 5'IMP and that this conversion is catalyzed by the enzyme deaminase.

It is also known that tomato contains appreciable levels of glutamate. It is further known that tomato contains 5'nucleoside monophosphates, 5'adinosine monophosphate (5'AMP) being predominant. In contrast, 5'GMP and 5'IMP are found in tomato in very low concentrations.

### SUMMARY OF THE INVENTION

The inventors have discovered that the taste contribution of tomato products such as tomato paste, tomato juice, tomato serum and tomato pulp can be improved by treating these tomato products with deaminase, thereby converting the 5'AMP contained therein into 5'IMP. The aforementioned tomato products contain appreciable levels of water-soluble components such as fructose, glucose, acids (citrate, glutamate, malate, aspartate), potassium and pectin. Furthermore, these tomato products also contain oil-soluble components such as lycopene and optionally also other components such as insoluble tomato fibres. The tomato derived compositions of the present invention that are obtained by treating these tomato products with deaminase differ from known tomato products in that the 5'IMP content is higher and the 5'AMP content is lower.

Thus, one aspect of the invention relates to a process of preparing a tomato derived composition comprising
providing a starting material containing t least 80% by weight of dry matter of one or more tomato derived products selected from tomato paste, tomato juice, tomato serum, tomato pulp and combinations thereof;
treating the starting material with deaminase to convert at least 30% of the 5'AMP contained therein into 5'IMP.

Another aspect of the invention relates to a tomato derived composition obtainable by said process comprising, by weight of soluble dry matter:
- 30-80 wt.% monosaccharides;
- 2-10 wt.% glutamic acid;
- 1-20 wt.% citric acid;
- 0.2-12 wt.% malic acid;
- 0.3-6 wt.% aspartic acid;
- 0.03-1.0 wt.% 5'nucleoside monophosphates;
- 0.5-20 wt.% pectin;
- 0.5-12 wt.% potassium;
- 0.001-1.0 wt.% lycopene; and
- 10-50 wt.% of other components;
wherein the 5'nucleoside monophosphates contained in the composition are composed of:
- 30-90 wt.% of 5'inosine monophosphate (5'IMP);
- 10-50 wt.% of 5'uridine monophosphate (5'UMP);
- 0-40 wt.% of 5'adenosine monophosphate (5'AMP); and
- 0-20 wt.% of other 5'nucleoside monophosphates

Yet another aspect of the present invention relates to a method of preparing an edible savoury edible product comprising at least 30% by weight of dry matter of the aforementioned tomato derived composition.

### DETAILED DESCRIPTION OF THE INVENTION

Accordingly, the present invention provides a tomato derived composition as claimed.

The term "nucleoside" as used herein refers to a glycosylamine consisting of a nucleobase bound to a ribose or deoxyribose sugar via a beta-glycosidic linkage. Examples of nucleosides include cytidine, uridine, adenosine, guanosine, thymidine and inosine.

The terms "glutamic acid", "pyroglutamic acid", "citric acid", "malic acid", "aspartic acid" as used herein, unless indicated otherwise, also encompass salts of these acids.

The bulk of the dry matter contained in the tomato derived composition of the present invention preferably comes from tomato. Typically, at least 80 wt.%, more preferably at least 90 wt.% and most preferably at least 95 wt.% of the dry matter contained in the tomato derived composition is derived from tomato.

The tomato solids contained in the present composition are provided by tomato paste, tomato juice, tomato serum, tomato pulp or a combination thereof. Accordingly, in a preferred embodiment at least 80 wt.% of the dry matter contained in the composition is provided by a tomato derived product selected from tomato paste, tomato juice, tomato serum, tomato pulp and combinations thereof. Most preferably at least 80 wt.% of the dry matter is provided by tomato paste.

The pectin and lycopene content of the tomato derived product can vary considerably depending on whether or not tomato insolubles were removed from the tomato starting material by means of e.g. centrifugation or decanting. Tomato serum is an example of a starting material from which tomato insolubles have been removed by centrifugation. In comparison to other tomato starting materials, such as tomato paste, the level of lycopene and possibly also to the level of pectin may be substantially reduced.

Preferably, the tomato derived composition is prepared from a tomato starting material that contains a significant amount of tomato insolubles and substantial levels of pectin and/or lycopene. Accordingly, it is preferred that the tomato derived composition contains, by weight of dry matter, at least 0.8 wt.%, more preferably at least 1.5 wt.% and most preferably at least 2 wt.% pectin. The amount of pectin contained in the tomato derived composition preferably does not exceed 12 wt.%, by weight of dry matter.

Likewise, it is preferred that the tomato derived composition contains, by weight of dry matter, a least 0.005 wt.%, more preferably at least 0.02 wt.% and most preferably at least 0.05 wt.% lycopene.

Advantageously, the 5'nucleoside monophosphates are contained in the tomato derived composition in a concentration of not more than 0.8 wt.% by weight of dry matter most preferably in a concentration of not more than 0.6 wt.% by weight of dry matter.

The tomato derived composition of the present invention preferably contains at least some of the deaminase that was used in the preparation of the composition. According to a particularly preferred embodiment this deaminase is heat-inactivated deaminase.

The deaminase employed in accordance with the present invention preferably is a 5'-adenylate deaminase (or 5'-adenylate aminohydrolase) that has been classified as EC 3.5.4.6.

According to another preferred embodiment, 5'IMP is present in the tomato derived composition in a concentration of 2-30%, most preferably 5-20% by weight of glutamic acid.

Pyroglutamic acid is an amino acid derivative in which the free amino group of glutamic acid has cyclised to form a lactam. N-terminal glutamine residues in proteins and free glutamine can spontaneously cyclize and convert to pyroglutamate. Pyroglutamic acid is found in appreciable amounts in (heat) processed plant materials that are rich in glutamine and/or glutamic acid. The tomato derived composition typically contains both glutamic acid and pyroglutamic acid.

Preferably, the composition contains 1-20 %, more preferably 2-10 % of pyroglutamate by weight of dry matter. Expressed differently, it is preferred that the composition comprises 20-300 % of pyroglutamic acid by weight of glutamic acid.

Advantageously, a substantial part of the 5'AMP that was present in the starting material for the present tomato derived composition has been converted into 5'IMP. Accordingly, 5'IMP and 5'AMP are preferably contained in the composition in a weight ratio that exceeds 1:1, more preferably in a weight ratio that exceeds 2:1 and most preferably in a weight ratio that exceeds 4:1.

Typically, 5'UMP and 5'AMP are contained in the tomato derived composition in a weight ratio of 5'UMP to 5'AMP that exceeds 1:1, more preferably in a weight ratio that exceeds 3:1.

In accordance with another preferred embodiment 5'AMP and 5'IMP are contained in the composition in a combined concentration (w/w) that equals 1 to 4 times the 5'UMP concentration (w/w).

Typically, 5'guanosine monophosphate (5'GMP) is not more than a minor component of the tomato derived composition, representing less than 10 wt.% even more preferably not more than 6 wt.% of the 5'nucleoside monophosphates contained in the composition.

The tomato derived composition typically comprises 5-40 % by weight of dry matter of acids selected from citric acid, glutamic acid, malic acid, aspartic acid and combinations thereof. More preferably, the composition contains 8-30 %, most preferably 10-25 % by weight of dry matter of acids selected from citric acid, glutamic acid, malic acid, aspartic acid and combinations thereof.

According to a preferred embodiment, the tomato derived composition comprises 3-8 %, more preferably 4-7 % by weight of dry matter of glutamic acid.

Citric acid is preferably contained in the tomato derived composition in a concentration of 2-20 %, more preferably of 2.5-15% by weight of dry matter.

According to another preferred embodiment, the tomato derived composition comprises 0.5-4%, more preferably 0.6-3% by weight of dry matter of aspartic acid.

According to yet another preferred embodiment, the tomato derived composition comprises 0.4-7%, more preferably 0.5-5% by weight of dry matter of malic acid.

Fructose and glucose represent the bulk of the monosaccharides contained in the present composition. Typically, the fructose and glucose together represent at least 90% wt.% of the monosaccharides.

A further aspect of the invention relates to a method of preparing an edible savoury product, said method comprising combining a tomato derived composition as described above with one or more other food ingredients so as to produce an edible product comprising at least 30%, more preferably at least 50% of said tomato derived composition by weight of dry matter.

The savoury edible product yielded by the method, comprises at least 30% by weight of dry matter of the tomato derived composition described above.

Examples of savoury edible products yielded by the method include soups, sauces, condiments, cooking aids, seasonings and bouillons.

According to a particularly preferred embodiment the edible savoury product yielded by the method, contains 1-200 g of glutamic acid per kg of dry matter. Even more preferably, the product contains 2-150 g of glutamic acid per kg of dry matter, most preferably 4-100 g of glutamic acid per kg of dry matter.

According to another particularly preferred embodiment, 5'IMP is contained in the product yielded by the method in a concentration of 1-50% by weight of glutamic acid, more preferably of 2-30% by weight of glutamic acid and most preferably of 5-20% by weight of glutamic acid.

The savoury product yielded by the method typically comprises 20-300% of pyroglutamic acid by weight of glutamic acid.

5'IMP and 5'AMP are preferably contained in the product yielded by the method in a weight ratio that exceeds 1:1, more preferably in a weight ratio that exceeds 2:1 and most preferably in a weight ratio that exceeds 4:1

5'UMP and 5'AMP are typically contained in the savoury product yielded by the method in a weight ratio of 5'UMP to 5'AMP that exceeds 1:1, more preferably in a weight ratio that exceeds 3:1

In accordance with another preferred embodiment 5'AMP and 5'IMP are contained in the savoury product yielded by the method in a combined concentration (w/w) that equals 1 to 4 times the 5'UMP concentration (w/w).

Typically, 5'GMP is contained in the savoury product yielded by the method in a concentration of less than 10 wt.% even more preferably not more than 6 wt.% of the 5'nucleoside monophophates contained in the product.

According to a particularly preferred embodiment, the savoury product yielded by the method contains at least 40% tomato solids by weight of dry matter. Examples of products containing substantial levels of tomato solids include ketchup, tomato soup and tomato-based sauce.

According to another preferred embodiment, the savoury product yielded by the method does not contain added yeast extract or yeast autolysate. It is also preferred that the savoury product does not contain added monosodium glutamate, added 5'IMP or added 5'GMP.

Yet another aspect of the invention relates to a process of preparing a tomato derived composition, preferably a tomato derived composition as described herein before, said process comprising:
- providing a starting material containing at least 80% by weight of dry matter of one or more tomato derived products selected from tomato paste, tomato juice, tomato serum, tomato pulp and combinations thereof;
- treating the starting material with deaminase to convert at least 30% of the 5'AMP contained therein into 5'IMP.

Advantageously, the cell walls of tomato cells contained in the tomato derived products are destructed prior to the treatment with deaminase. The tomato cell walls may suitably be destructed using techniques known in the art, e.g. using mechanical shear, enzymolysis etc.

According to a particularly preferred embodiment of the present process the starting material is treated with glutaminase to convert at least 20%, more preferably at least 40% of the glutamine present therein into glutamate. Conversion of glutamine into glutamate further enhances the flavour characteristics of the tomato derived composition. Most preferably, the treatment with deaminase to convert AMP into IMP and the treatment with glutaminase to convert glutamine into glutamate occur simultaneously.

After the enzymatic conversion of 5'AMP into 5'IMP, the deaminase is preferably inactivated by heating it to at least 70°C, more preferably at least 75°C, for 10 minutes or more.

The invention is further illustrated by the following non-limiting example.

### EXAMPLES

### Example 1

10 tins of "Euroshopper tomato puree (68 g)" were opened. Their content was transferred to a flask. The total transferred amount was 610 grams. To this, 305 grams purified water was added and thoroughly mixed. The diluted sample was transferred to centrifuge tubes and centrifuged at 8500 rpm for 60 minutes.

From the centrifuged samples, 500 grams of supernatant was taken. The pH of the supernatant was adjusted to 5.2 (originally 4.3) using a 1% NaOH solution. Subsequently the supernatant was split into 2 samples of 250 g each.

To one of the samples 25 mg (=0.01%) of Deamizyme™ 50000 (Amano DNG0353141) was added. This sample is called "enzyme treated". The sample without enzyme is called "Blank".

Both samples were put for 20 minutes in a water bath of 45°C. After 30 minutes the temperature of the water bath was raised to 80°C. After reaching the set temperature, the samples were kept in the bath for another 15 minutes to deactivate the enzyme. The hot samples were transferred to a sterilized jar, closed, cooled down and kept frozen until testing. Small amounts were submitted for NMR analysis.

For quantification of the relevant taste compounds 1D 1H NMR spectra were recorded with a NOESYGPPR1D pulse sequence on a Bruker DRX 600 NMR spectrometer, equipped with a 5-mm SEI probe. For quantification of AMP and IMP, the anomeric signals around δ 6.14 were selected, and for glutamate the multiplet at δ 2.13. Identification was confirmed by spiking with pure compounds obtained from Janssen Chimica and for quantification the internal standard 3-(Trimethylsilyl)propionic-2,2,3,3-d4 acid was used.

In the "blank" sample the glutamate concentration was found to be 2.72±0.03 mg/g and the AMP 0.31± 0.01 mg/g, IMP was not detectable.

In the "enzyme treated" sample the glutamate concentration was 2.74+/-0.03 mg/g and the IMP concentration 0.26+/-0.01 mg/g, whereas AMP could not be detected, indicating a complete conversion.

For blind tasting, 20 ml of the samples were transferred to small cups. The cups were labelled with a random three letter code. Panel members were asked to describe the differences between the two samples.

The flavour of the "enzyme treated" sample was judged to be clearly different from the "blank". Whereas the "blank" was characterised by a fresh-sour and fruity flavour, the "enzyme treated" sample according to the panellists was dominated by a savoury taste.

### Example 2

Three 140g tins of "Perfekt" tomato puree, obtained from the Hoogvliet supermarket (Vlaardingen, the Netherlands) were opened. Their content was transferred to a flask. The total transferred amount was 420 grams. To this, 140 grams purified water was added and the combination was thoroughly mixed. The diluted sample was transferred to centrifuge tubes and centrifugated at 9000 rpm for 60 minutes.

From the centrifugated samples, 200 grams of supernatant was taken. The pH of the supernatant was adjusted to 5.2 (originally 4.2) using a 1M NaOH solution. Subsequently the supernatant was split into 2 samples of 100 g each. Both samples were heated to 45°C in a thermostated double walled glass vessel. To one of the samples 10 mg (=0.01%) of Deamizyme™ 50000 (Amano) was added. This sample is called "enzyme treated". The sample without enzyme is called "blank".

Both samples were incubated for 30 minutes at 45°C. After 30 minutes the temperature of the water bath was raised to 80°C. After reaching this temperature in the thermostated double walled glass vessel, the samples were kept for another 5 minutes to deactivate the enzyme. The hot samples were transferred to a sterilized jar, closed, cooled down and kept frozen until testing. Small amounts were submitted for NMR analysis as in Example 1.

In the "blank" sample the glutamate concentration was found to be 3.65±0.03 mg/g and the AMP concentration 0.37±0.01 mg/g, IMP was not detectable. In the "enzyme treated" sample the glutamate concentration was 3.59+/-0.03 mg/g and the IMP concentration 0.36+/-0.01 mg/g, whereas AMP could not be detected, indicating a complete conversion.

For blind tasting both samples were 10 times diluted and salt was added at 0.5% (w/w). Both samples were divided over small cups of 20 ml. The cups were labelled with a random three letter code. Six expert tasters were asked to compare the two samples on the attribute "umami" in a 2AFC test, to rate the umami taste of the two samples versus two references, 0.5 g/l and 2.0 g/l MSG in water defined as 3 and 8 respectively on the scale, and finally to describe the differences between the two samples.

All tasters identified the "enzyme treated" sample as most umami. The umami score of that sample was 6.8 +/- 1.5; the umami score of the "blank" was 3.1 +/- 0.7. According to Anova statistics the difference was significant (p<0.05).The flavour of the "enzyme treated" sample was judged to be clearly different from the "blank". Whereas the "blank" was characterised by a fresh-sour and fruity flavour, the "enzyme treated" sample according to the panellists was dominated by a umami, savoury taste, which was more intense. According to most panellists the enzyme treated sample also had more mouthfeel.

### Example 3

One 500g package of "Perfekt" sieved tomatoes from Hoogvliet supermarket (Vlaardingen, the Netherlands) was opened, divided over two centrifuge tubes, and centrifugated at 9000 rpm for 60 minutes. From the centrifuged samples, 200 grams of supernatant was taken. The pH of the supernatant was adjusted to 5.2 (originally 4.2) using a 1M NaOH solution. Subsequently the supernatant was split into 2 samples of 100 g each.

Both samples were heated to 45°C in a thermostated double walled glass vessel. To one of the samples 10 mg (=0.01%) of Deamizyme™ 50000 (Amano) was added. This sample is called "enzyme treated". The sample without enzyme is called "blank".

Both samples were incubated for 30 minutes at 45°C. After 30 minutes the temperature of the water bath was changed to 80°C. After reaching this temperature in the thermostated vessel, the samples were kept for another 5 minutes to deactivate the enzyme. The hot samples were transferred to a sterilized jar, closed, cooled down and kept frozen until testing. Small amounts were submitted for NMR analysis as in Example 1.

In the "blank" sample the glutamate concentration was found to be 2.28±0.03 mg/g and the AMP 0.20± 0.01 mg/g, IMP was not detectable. In the "enzyme treated" sample the glutamate concentration was 2.21+/-0.03 mg/g and the IMP concentration 0.20+/-0.01 mg/g, whereas AMP could not be detected, indicating a complete conversion.

For blind tasting both samples were 5 times diluted and salt was added at 0.5% (w/w). Both samples were divided over small cups of 20 ml. The cups were labelled with a random three letter code. Six expert tasters were asked to compare the two samples on the attribute "umami" in a 2AFC test, to rate the umami taste of the two samples versus two references, 0.5 g/l and 2.0 g/l MSG in water defined as 3 and 8 respectively on the scale, and finally to describe the differences between the two samples.

All tasters identified the "enzyme treated" sample as most umami. The average umami score of that sample was 6.5; the umami score of the "blank" was 4.1. The flavour of the "enzyme treated" sample was judged to be clearly different from the "blank". Whereas the "blank" was characterised by a fresh-sour and fruity flavour, the "enzyme treated" sample according to the panellists had a stronger taste and a changed character dominated by umami, savoury notes. According to some panellists the enzyme treated sample also had more mouthfeel.

### Example 4

Three 140g tins of "Perfekt" tomato puree, obtained from the Hoogvliet supermarket (Vlaardingen, the Netherlands) were opened. Their content was transferred into a flask. The total transferred amount was 412 grams. To this puree 1250 grams purified water was added and the combination was thoroughly mixed. The pH of the diluted puree was adjusted to 5.2 (originally 4.2) using a 1M NaOH solution.

To 200 g of diluted puree 20 mg (=0.01%) of Deamizyme™ 50000 (Amano) was added. This sample is called "enzyme treated". Another 200 g of diluted puree was taken to which no enzyme was added; this sample is called "blank". Both samples were incubated in a thermostated double walled glass vessel for 30 minutes at 45°C. After 30 minutes the temperature of the water bath was raised to 80°C. After reaching the temperature in the thermostated vessel, the samples were kept for another 5 minutes to deactivate the enzyme. The hot samples were transferred to a sterilized jar, closed, cooled down and kept frozen until testing.

For blind tasting both samples were two times diluted and divided over small cups of 20 ml. The cups were labelled with a random three letter code. Six expert tasters were asked to compare the two samples on the attribute "umami" in a 2AFC test, to rate the umami taste of the two samples versus two references, 0.5 g/l and 2.0 g/l MSG in water defined as 3 and 8 respectively on the scale, and finally to describe the differences between the two samples.

All tasters identified the "enzyme treated" sample as most umami. The umami score of that sample was 6.8; the umami score of the "blank" was 4.8. The flavour of the "enzyme treated" sample was judged to be clearly different from the "blank", more intense and more of a savoury and umami character.

### Example 5

6 tins of "Perfekt" tomato puree (140 g each), from Hoogvliet supermarket Vlaardingen, the Netherlands, were opened. Their content was transferred to a flask. The total transferred amount was 850 grams. To this, 280 grams purified water was added and the combination was thoroughly mixed. The diluted sample was transferred to centrifuge tubes and centrifugated at 9000 rpm for 60 minutes.

From the centrifugated samples, 500 grams of supernatant was taken. The pH of the supernatant was adjusted to 5.2 (originally 4.3) using a 1M NaOH solution. Subsequently the supernatant was split into 2 samples of 250 g each.

Both samples were heated to 45°C in a thermostated double-walled glass vessel. To one of the samples 25 mg (=0.01%) of Deamizyme™ 50000 (Amano) was added. This sample is called "enzyme treated". The sample without enzyme is called "blank". Both samples were incubated for 30 minutes in a water bath of 45°C. After 30 minutes the temperature of the water bath was raised to 80°C. After reaching the set temperature, the samples were kept in the bath for another 5 minutes to deactivate the enzyme. The hot samples were transferred to a sterilized jar, closed, cooled down and kept frozen until testing. NMR analysis, carried out as described in Example 1 indicated a full conversion of AMP to IMP in the "enzyme treated" sample.

For blind tasting both samples were 12 times diluted and divided over small cups of 30 ml. The cups were labelled with a random three-letter code; several different paired comparisons were presented in a random design to the 15 highly trained panel members in one session. Four replicates were tasted, resulting in 60 2AFC assessments. The panel members, placed in separated tasting booths, individually answered the question 'which product has the most intense umami taste'. Their training and selection had encompassed regular screening of their ability to recognise basic tastes and aromas, and their sensitivity to intensity differences. During the session the panellists could clean their palate with cream crackers, cucumber and water. At the beginning of the session two reference samples were presented, containing 0.5 g/l and 2.0 g/l, respectively, of MSG in water, defined as 3 and 8 respectively on the umami scale. At the end of the session these same two references were used to score the samples on umami intensity. The two samples were scored individually and after discussion a consensus score was defined.

In 44 of the 60 2AFC assessments the "enzyme treated" sample was selected as most umami, in 16 assessments the "blank". This difference is highly significant (p < 0.001; d'= 0.88, Power = 0.98). The consensus umami score of the "enzyme treated" sample was 7.5; the umami score of the "blank" was 4.5.

### Example 6

3.8 kg of" Trostomaten" (Albert Heijn supermarket, Vlaardingen, the Netherlands) were unpeeled by immersion for a few minutes in hot water and milled with a stainless steel vegetable mill. The juice was collected in two cans. After a few minutes treatment with an immersion blender the tomato juice was transferred to centrifuge tubes and centrifugated at 9000 rpm for 60 minutes.

From the centrifugated samples, 1200 grams of supernatant was taken. The pH of the supernatant was adjusted to 5.2 (originally 4.5) using a 1M NaOH solution. Subsequently two samples of supernatant of 500g each were taken.

Both samples were heated to 45°C in a thermostated double-walled glass vessel. To one of the samples 52 mg (=0.01%) of Deamizyme™ 50000 (Amano) was added. This sample is called "enzyme treated". The sample without enzyme is called "blank". The samples were incubated for 30 minutes in a water bath of 45°C. After 30 minutes the temperature of the water bath was raised to 80°C. After reaching the set temperature, the samples were kept in the bath for another 5 minutes to deactivate the enzyme. The hot samples were transferred to a sterilized jar, closed, cooled down and kept frozen until testing. Small amounts were submitted for NMR analysis, performed as described in Example 1, which indicated a full conversion of AMP to IMP in the "enzyme treated" sample.

For blind tasting both samples were 5 times diluted, and divided over small cups of 30 ml. The cups were labelled with a random three letter code; in one session several different paired comparisons were presented in a random design to the 15 highly trained panel members. Four replicates were tasted, resulting in 60 2AFC assessments. The panel members, separated in tasting booths, individually answered the question 'which product has the most intense umami taste'. Their training and selection had encompassed regular screening of their ability to recognise basic tastes and aromas, and their sensitivity to intensity differences. During the session the panellists could clean their palate with cream crackers, cucumber and water. At the beginning of the session two reference samples were presented, containing 0.5 g/l and 2.0 g/l, respectively, of MSG in water, defined as 3 and 8 respectively on the umami scale. At the end of the session these same two references were used to score the samples on umami intensity. The two samples were scored individually and after discussion a consensus score was defined.

In 39 of the 60 2AFC assessments the "enzyme treated" sample was selected as most umami, in 21 assessments the "blank". This difference is significant (p < 0.05; d'= 0.54, Power = 0.74). The consensus umami score of the "enzyme treated" sample was 6; the consensus umami score of the "blank" was 3.

### Example 7

2.3 kg of fresh "Roma tomatoes" (Albert Heijn supermarket, Vlaardingen, the Netherlands) were unpeeled after immersion for a few minutes in hot water and were milled with a stainless steel vegetable mill. The collected juice was treated for a few minutes with an immersion blender, transferred to centrifuge tubes, and centrifugated at 9000 rpm for 60 minutes.

From the centrifugated samples, 1100 grams of supernatant was taken. The pH of the supernatant was adjusted to 6.0 (originally 4.5) using a 1M NaOH solution. Subsequently 2 samples of 350 g of supernatant were taken.

Both samples were heated to 55°C in a thermostated double-walled glass vessel. To both samples 37 mg (= 0.01 %) of Deamizyme™ 50000 (Amano) was added and to only one of the samples 710 mg (= 0.2 %) Glutaminase SD-C100S (Amano) was added on top. This sample is called "D+G treated". The sample without glutaminase enzyme is called "D treated".

Both samples were incubated for 30 minutes in a water bath of 55°C. After 30 minutes the temperature of the water bath was raised to 80°C. After reaching the set temperature, the samples were kept in the bath for another 5 minutes to deactivate the enzymes. The hot samples were transferred to a sterilized jar, closed, cooled down and kept frozen until testing. Small amounts were submitted to NMR analysis, performed as described in Example 1, which indicated complete conversion of AMP to IMP in both samples, and of glutamine to glutamate in the "D+G treated" sample.

For blind tasting both samples were 8 times diluted, and divided over small cups of 30 ml. The cups were labelled with a random three letter code; in one session several different paired comparisons were presented in a random design to the 15 highly trained panel members. Four replicates were tasted, resulting in 60 2AFC assessments. The panel members, separated in tasting booths, individually answered the question 'which product has the most intense umami taste'. Their training and selection had encompassed regular screening of their ability to recognise basic tastes and aromas, and their sensitivity to intensity differences. During the session the panellists could clean their palate with cream crackers, cucumber and water. At the beginning of the session two reference samples were presented, containing 0.5 g/l and 2.0 g/l, respectively, of MSG in water, defined as 3 and 8 respectively on the umami scale. At the end of the session these same two references were used to score the samples on umami intensity. The two samples were scored individually and after discussion a consensus score was defined.

In 42 of the 60 2AFC assessments the "D+G treated" sample was selected as most umami, in 18 assessments the "D treated" sample. This difference is significant (p < 0.01; d'= 0.74, Power = 0.93). The consensus umami score of the "D+G treated" sample was 6; the consensus umami score of the "D treated" sample was 3.5.

## Claims

1. A process of preparing a tomato derived composition, comprising:
• providing a starting material containing at least 80% by weight of dry matter of one or more tomato derived products selected from tomato paste, tomato juice, tomato serum, tomato pulp and combinations thereof;
• treating the starting material with deaminase to convert at least 30% of the 5'AMP contained therein into 5'IMP.

2. Process according to claim 1, wherein the starting material is treated with glutaminase to convert at least 20% of the glutamine contained therein into glutamate.

3. Process according to claim 1 or 2, wherein the treated starting material is heated to at least 70°C for 10 minutes or more to inactivate the deaminase.

4. A tomato derived composition obtainable by a process according to any one of claims 1-3, said composition comprising, by weight of dry matter:
• 30-80 wt.% monosaccharides;
• 2-10 wt.% glutamic acid;
• 1-20 wt.% citric acid;
• 0.2-12 wt.% malic acid;
• 0.3-6 wt.% aspartic acid;
• 0.03-1.0 wt.% 5'nucleoside monophosphates;
• 0.5-20 wt.% pectin;
• 0.5-12 wt.% potassium;
• 0.001-1.0 wt.% lycopene; and
• 10-50 wt.% of other components;
wherein the 5'nucleoside monophosphates contained in the composition are composed of:
• 30-90 wt.% of 5'inosine monophosphate (5'IMP);
• 10-50 wt.% of 5'uridine monophosphate (5'UMP);
• 0-40 wt.% of 5'adenosine monophosphate (5'AMP); and
• 0-20 wt.% of other 5'nucleoside monophosphates.

5. Composition according to claim 4, wherein at least 80 wt.% of the dry matter contained in the composition is derived from tomato.

6. Composition according to claim 4 or 5, wherein at least 80 wt.% of the dry matter contained in the composition is provided by a tomato product selected from tomato paste, tomato juice, tomato serum, tomato pulp and combinations thereof.

7. Composition according to any one of claims 4-6, wherein the composition contains deaminase.

8. Composition according to claim 7, wherein the deaminase is heat-inactivated deaminase.

9. Composition according to any one of claims 4-8, wherein 5'IMP is present in a concentration of 1-50% by weight of glutamic acid.

10. Composition according to any one of claims 4-9, wherein the 5'IMP and 5'AMP are contained in the composition in a weight ratio that exceeds 1:1.

11. Composition according to any one of claims 4-10, wherein the 5'AMP and 5'IMP are contained in the composition in a combined concentration (w/w) that equals 1 to 4 times the 5'UMP concentration (w/w).

12. Composition according to any one of claims 4-11, wherein the composition contains 1-20 % of pyroglutamate by weight of dry matter.

13. Composition according to any one of claims 4-12, wherein the composition comprises 20-300 % of pyroglutamic acid by weight of glutamic acid.

14. A method of preparing an edible savoury product, said method comprising combining a tomato derived composition according to any one of claims 4-13 with one or more other food ingredients so as to produce an edible product comprising at least 30% of said tomato derived composition by weight of dry matter.

## Patentansprüche

1. Verfahren zur Herstellung einer von Tomaten abgeleiteten Zusammensetzung, umfassend:
• Bereitstellen eines Ausgangsmaterials, das mindestens 80 Gewichts-% Trockenmasse von einem oder mehreren von Tomaten abgeleiteten Produkten, ausgewählt aus Tomatenpaste, Tomatensaft, Tomatenserum, Tomatenmark und Kombinationen davon, enthält,
• Behandeln des Ausgangsmaterials mit Deaminase, um mindestens 30% des 5'AMP, das darin enthalten ist, in 5'IMP zu überführen.

2. Verfahren nach Anspruch 1, wobei das Ausgangsmaterial mit Glutaminase behandelt wird, um mindestens 20% des darin enthaltenen Glutamins in Glutamat zu überführen.

3. Verfahren nach Anspruch 1 oder 2, wobei das behandelte Ausgangsmaterial auf mindestens 70°C 10 Minuten oder mehr erhitzt wird, um die Deaminase zu inaktivieren.

4. Von Tomaten abgeleitete Zusammensetzung, erhältlich durch ein Verfahren nach irgendeinem der Ansprüche 1 bis 3, wobei die Zusammensetzung, bezogen auf das Gewicht der Trockenmasse, enthält:
• 30-80 Gew.-% Monosaccharide,
• 2-10 Gew.-% Glutaminsäure,
• 1-20 Gew.-% Citronensäure,
• 0,2-12 Gew.-% Äpfelsäure,
• 0,3-6 Gew.-% Asparginsäure,
• 0,03-1,0 Gew.-% 5'Nukleosidmonophosphate,
• 0,5-20 Gew.-% Pektin,
• 0,5-12 Gew.-% Kalium,
• 0,001-1,0 Gew.-% Lycopin und
• 10-50 Gew.-% andere Bestandteile,
wobei die 5'-Nukleosidmonophosphate, die in der Zusammensetzung enthalten sind, gebildet sind aus:
• 30-90 Gew.-% 5'Inosinmonophosphat (5'IMP),
• 10-50 Gew.-% 5'Uridinmonophosphat (5'UMP),
• 0-40 Gew.-% 5'Adenosinmonophosphat (5'AMP) und
• 0-20 Gew.-% anderen 5'Nukleosidmonophosphaten.

5. Zusammensetzung nach Anspruch 4, wobei mindestens 80 Gew.-% der Trockenmasse, die in der Zusammensetzung enthalten sind, von Tomaten abgeleitet sind.

6. Zusammensetzung nach Anspruch 4 oder 5, wobei mindestens 80 Gew.-% der Trockenmasse, die in der Zusammensetzung enthalten ist, durch ein Tomatenprodukt bereitgestellt wird, das aus Tomatenpaste, Tomatensaft, Tomatenserum, Tomatenmark und Kombinationen davon ausgewählt ist.

7. Zusammensetzung nach irgendeinem der Ansprüche 4-6, wobei die Zusammensetzung Deaminase enthält.

8. Zusammensetzung nach Anspruch 7, wobei die Deaminase Hitze-inaktivierte Deaminase ist.

9. Zusammensetzung nach irgendeinem der Ansprüche 4-8, wobei 5'IMP in einer Konzentration von 1-50 Gewichts-% der Glutaminsäure vorliegt.

10. Zusammensetzung nach irgendeinem der Ansprüche 4-9, wobei das 5'IMP und das 5'AMP in der Zusammensetzung in einem Gewichtsverhältnis enthalten sind, das 1:1 überschreitet.

11. Zusammensetzung nach irgendeinem der Ansprüche 4-10, wobei das 5'AMP und das 5'IMP in der Zusammensetzung in einer kombinierten Konzentration (Gew/Gew) enthalten sind, das dem 1- bis 4-Fachen der 5'UMP-Konzentration (Gew/Gew) gleich ist.

12. Zusammensetzung nach irgendeinem der Ansprüche 4-11, wobei die Zusammensetzung 1-20% Pyroglutamat, bezogen auf das Gewicht der Trockenmasse, enthält.

13. Zusammensetzung nach irgendeinem der Ansprüche 4-12, wobei die Zusammensetzung 20-300% Pyroglutaminsäure, bezogen auf das Gewicht der Glutaminsäure, umfasst.

14. Verfahren zur Herstellung eines essbaren schmackhaften Produktes, wobei das Verfahren das Kombinieren einer von Tomaten abgeleiteten Zusammensetzung nach irgendeinem der Ansprüche 4-13 mit einem oder mehreren anderen Nahrungsmittelbestandteilen umfasst, um dadurch ein essbares Produkt herzustellen, das mindestens 30% der von Tomaten abgeleiteten Zusammensetzung, bezogen auf das Gewicht der Trockenmasse, umfasst.

## Revendications

1. Procédé de préparation d'une composition dérivée de la tomate, comprenant :
• la fourniture d'une matière de départ contenant au moins 80 % en masse de matière sèche d'un ou plusieurs produits dérivés de la tomate choisis parmi de la pâte de tomate, du jus de tomate, du sérum de tomate, de la pulpe de tomate et des combinaisons de ceux-ci ;
• le traitement de la matière de départ avec une déaminase pour convertir au moins 30 % des 5'AMP contenus dans celle-ci en 5'IMP.

2. Procédé selon la revendication 1, dans lequel la matière de départ est traitée avec de la glutaminase pour convertir au moins 20 % de la glutamine contenue dans celle-ci en glutamate.

3. Procédé selon la revendication 1 ou 2, dans lequel la matière de départ traitée est chauffée à au moins 70°C pendant 10 minutes ou plus pour inactiver la déaminase.

4. Composition dérivée de la tomate pouvant être obtenue par un procédé selon l'une quelconque des revendications 1-3, ladite composition comprenant, en masse de matière sèche :
• 30 - 80 % en masse de monosaccharides ;
• 2 - 10 % en masse d'acide glutamique ;
• 1 - 20 % en masse d'acide citrique ;
• 0,2 - 12 % en masse d'acide malique ;
• 0,3 - 6 % en masse d'acide aspartique ;
• 0,03 - 1,0 % en masse de monophosphates de 5'nucléoside ;
• 0,5 - 20 % en masse de pectine ;
• 0,5 - 12 % en masse de potassium ;
• 0,001 - 1,0 % en masse de lycopène ; et
• 10 - 50 % en masse d'autres constituants ;
dans laquelle les monophosphates de 5'nucléoside contenus dans la composition sont constitués de :
• 30 - 90 % en masse de monophosphate de 5'inosine (5'IMP) ;
• 10-50 % en masse de monophosphate de 5'uridine (5'UMP) ;
• 0-40 % en masse de monophosphate de 5'adénosine (5'AMP) ; et
• 0 - 20 % en masse d'autres monophosphates de 5'nucléoside.

5. Composition selon la revendication 4, dans laquelle au moins 80 % en masse de la matière sèche contenue dans la composition est dérivée de la tomate.

6. Composition selon la revendication 4 ou 5, dans laquelle au moins 80 % en masse de la matière sèche contenue dans la composition sont fournis par un produit de tomate choisi parmi de la pâte de tomate, du jus de tomate, du sérum de tomate, de la pulpe de tomate et des combinaisons de ceux-ci.

7. Composition selon l'une quelconque des revendications 4-6, dans laquelle la composition contient une déaminase.

8. Composition selon la revendication 7, dans laquelle la déaminase est une déaminase inactivée à la chaleur.

9. Composition selon l'une quelconque des revendications 4-8, dans laquelle 5'IMP est présent dans une concentration de 1 - 50 % en masse d'acide glutamique.

10. Composition selon l'une quelconque des revendications 4-9, dans laquelle les 5'IMP et 5'AMP sont contenus dans la composition dans un rapport massique qui excède 1:1.

11. Composition selon l'une quelconque des revendications 4-10, dans laquelle les 5'AMP et 5'IMP sont contenus dans la composition dans une concentration combinée (masse/masse) qui est égale à de 1 à 4 fois la concentration en 5'UMP (masse/masse).

12. Composition selon l'une quelconque des revendications 4-11, dans laquelle la composition contient 1-20 % de pyroglutamate en masse de matière sèche.

13. Composition selon l'une quelconque des revendications 4-12, dans laquelle la composition comprend 20-300 % d'acide pyroglutamique en masse d'acide glutamique.

14. Procédé de préparation d'un produit savoureux comestible, ledit procédé comprenant la combinaison d'une composition dérivée de la tomate selon l'une quelconque des revendications 4-13 avec un ou plusieurs autres ingrédients alimentaires afin de produire un produit comestible comprenant au moins 30 % de ladite composition dérivée de la tomate en masse de matière sèche.
